# EUROPEAN PATENT APPLICATION

(11) **EP 2 725 214 A1**
(43) Date of publication of application: **30.04.2014**
(21) Application number: 12802510.3
(22) Date of filing: 18.05.2012
(51) Int. Cl.: F02C 7/00, B23K 15/00, B23K 31/00, F01D 5/06, F01D 25/00

(54) **ROTOR FOR TURBINE, PROCESS FOR PRODUCING SAME, METHOD FOR BONDING NI-BASED SUPERALLOY MATERIAL TO STEEL MATERIAL, AND STRUCTURE**

(30) Priority: 22.06.2011 JP 2011138745
(71) Applicant: Kawasaki Jukogyo Kabushiki Kaisha, Kobe-shi, Hyogo 650-8670 (JP)
(72) Inventor: MATSUOKA, Akinori, Akashi-shi, Hyogo 673-8666 (JP); OKAUCHI, Hironori, Chuo-ku, Kobe-shi Hyogo 650-8670 (JP); KOGA, Shinji, Chuo-ku, Kobe-shi Hyogo 650-8670 (JP); HYOUE, Takehiro, Nishi-ku, Kobe-shi Hyogo 651-2271 (JP); TAKEDA, Yusuke, Akashi-shi, Hyogo 673-8666 (JP)
(74) Representative: Witte, Weller & Partner Patentanwälte mbB
(86) International application number: PCT/JP2012/003273
(87) International publication number: WO 2012/176373

(57) **Abstract**

A method of producing a turbine engine rotor includes: joining a first rotor disc (25H) and an intermediate member (26) together by electronic beam welding, the first rotor disc (25H) being formed of a precipitation hardened Ni-based superalloy, the intermediate member (26) being formed of a solid solution strengthened Ni-based superalloy; performing age-hardening treatment on the joined body at a first temperature which is a suitable temperature for age-hardening the precipitation hardened Ni-based superalloy; joining the intermediate member (26) and a second rotor disc (25L) together by electronic beam welding, the second rotor disc (25L) being formed of a steel; and performing annealing treatment on the joined body at a second temperature which is a suitable temperature for annealing the steel.

## Description

### Technical Field

The present invention relates to a heat-resistant turbine engine rotor for use in, for example, gas turbine engines and steam turbine engines. The present invention particularly relates to technology for joining a Ni-based superalloy member and a steel member, which are members forming a turbine engine rotor.

### Background Art

In order to improve the turbine engine efficiency of gas turbine engines and steam turbine engines, it is effective to increase their combustion temperature or main steam temperature. When the combustion temperature or main steam temperature is increased, the temperature of high-temperature turbine components is increased, accordingly. Therefore, in this case, these high-temperature components are required to have higher heat resistance. Examples of such high-temperature components include turbine engine rotors such as compressor rotors and turbine rotors. In such a turbine engine rotor, there is a region exposed to high temperatures, and also there is a region exposed to temperatures lower than the high temperatures. Accordingly, in order to reduce production costs, there is proposed a turbine engine rotor in which portions whose temperature increases to exceed a predetermined temperature are formed of a Ni (= nickel)-based superalloy, and portions whose temperature is lower than the predetermined temperature are formed of a relatively inexpensive steel. In the production of such a turbine engine rotor, the Ni-based superalloy member and the steel member are welded together. However, the Ni-based superalloy contains additional elements that cause unfavorable mechanical characteristics when bonded to the steel. In view of this, Patent Literatures 1 and 2 propose that the Ni-based superalloy member and the steel member be welded together not directly but with an intermediate layer interposed between the superalloy member and the steel member.

Patent Literature 1 discloses a method of joining a first portion and a second portion. The first portion is formed of a low-alloy steel and the second portion is formed of a Ni-based superalloy. In the method, a surface of the second portion that is to be joined to the first portion is coated with an intermediate layer in which an additional element (e.g., Nb (= niobium)) proportion gradually decreases from the inside to the outside, and then the first portion is welded to the surface of the second portion. Here, IN625 [IN = Inconel, registered trademark; indication of trademark registration is omitted hereinafter] is used as the Ni-based superalloy forming the second portion, and IN617 is used as the intermediate layer. The intermediate layer is a result of multiple individual layers being welded to each other by MAG (Metal Active Gas) welding or TIG (Tungsten Inert Gas) welding.

Patent Literature 2 discloses inserting a rotor ring between a first rotor disc formed of a Ni-based superalloy and a second rotor disc formed of a steel, the rotor ring being welded to both of the rotor discs. Here, the first rotor disc is formed of Waspaloy [registered trademark], and the second rotor disc is formed of 10% Cr (= chrome) steel. The rotor ring is a result of a first rotor ring and a second rotor ring welded together, the first rotor ring being formed of 10% Cr steel, the second rotor ring being formed of a solution heat treated Ni-based superalloy (IN617).

### Citation List

### Patent Literature

PTL 1: Japanese Laid-Open Patent Application Publication No. 2002-307169
PTL 2: Japanese Laid-Open Patent Application Publication No. 2005-121023

### Summary of Invention

### Technical Problem

The intermediate layer in Patent Literature 1 and the rotor ring in Patent Literature 2 are both formed of multiple members each having a different composition, and these multiple members are joined together by arc welding such as MAG welding or TIG welding. In the arc welding, a large amount of base material is melted during the welding. As a result, great deformation occurs at a joint between welded workpieces. Therefore, machining such as cutting is necessary after the welding. This results in an increase in the amount of processing.

In a case where a Ni-based superalloy member and a steel member (e.g., ferrite steel) are welded together, in general, a steel member having gone through quenching and tempering treatment, and a Ni-based superalloy member having gone through solution heat treatment, are welded together. After the welding, it is necessary to perform age-hardening treatment at a temperature higher than 700 °C in order to obtain ductility and toughness of the Ni-based superalloy portion. However, when the the steel portion is heated to such a temperature, the strength of the steel portion degrades significantly. Meanwhile, if age-hardening treatment and residual stress relief treatment are performed at a temperature not higher than 700 °C in order to suppress degradation of the strength of the steel portion, then the Ni-based superalloy portion cannot have excellent ductility and toughness.

The present invention has been made in order to solve the above-described problems. An object of the present invention is to provide a turbine engine rotor including a Ni-based superalloy portion and a steel portion and a method of producing the turbine engine rotor, in which a connection portion between the Ni-based superalloy portion and the steel portion has sufficient strength necessary for the turbine engine rotor, and in addition, deformation at the connection portion is suppressed to such a low level as to eliminate the necessity of performing after-treatment by machining. Another object of the present invention is to provide a method of joining a Ni-based superalloy member and a steel member, and a junction structure of the Ni-based superalloy member and the steel member, which are suitably applicable to the above turbine engine rotor.

### Solution to Problem

A method of producing a turbine engine rotor according to the present invention includes: joining a first rotor disc and an intermediate member together by electronic beam welding, the first rotor disc being formed of a solution heat treated precipitation hardened Ni-based superalloy, the intermediate member being formed of a solid solution strengthened Ni-based superalloy; performing age-hardening treatment on a joined body of the first rotor disc and the intermediate member at a first temperature which is a suitable temperature for age-hardening the precipitation hardened Ni-based superalloy; joining the intermediate member and a second rotor disc together by electronic beam welding, the second rotor disc being formed of a heat-resistant steel; and performing annealing treatment on a joined body of the first rotor disc, the intermediate member, and the second rotor disc at a second temperature which is a suitable temperature for annealing the steel.

A turbine engine rotor according to the present invention includes a plurality of rotor discs connected to each other in an axial direction. The turbine engine rotor includes: two rotor discs which are a first rotor disc and a second rotor disc adjacent to each other, the first rotor disc being formed of a solution heat treated precipitation hardened Ni-based superalloy, the second rotor disc being formed of a heat-resistant steel. The first rotor disc and an intermediate member are joined together by electronic beam welding, the intermediate member being formed of a solid solution strengthened Ni-based superalloy, and the second rotor disc and the intermediate member are joined together by electronic beam welding.

According to the above turbine engine rotor producing method or the above turbine engine rotor, the turbine engine rotor is allowed to include: a low temperature resistant portion formed of a steel member; and a high temperature resistant portion formed of a precipitation hardened Ni-based superalloy member resistant to higher temperatures than the steel member. The precipitation hardened Ni-based superalloy member (i.e., first rotor disc) and the steel member (i.e., second rotor disc) forming the turbine engine rotor are connected via an intermediate member formed of a solid solution strengthened Ni-based superalloy. This makes it possible to suitably perform different heat treatments on the steel portion and the precipitation hardened Ni-based superalloy portion, respectively. Specifically, in a state where the precipitation hardened Ni-based superalloy member and the intermediate member are joined together, age-hardening treatment can be performed for allowing the precipitation hardened Ni-based superalloy portion to have necessary strength. Also, in a state where the precipitation hardened Ni-based superalloy member, the intermediate member, and the steel member are joined together, annealing treatment on the steel portion and residual stress relief treatment can be performed. This makes it possible to allow a connection portion between the high temperature resistant portion and the low temperature resistant portion of the turbine engine rotor to have sufficient strength necessary for the turbine engine rotor. Further, the precipitation hardened Ni-based superalloy member (i.e., first rotor disc) and the intermediate member are joined together by electronic beam welding, and also, the intermediate member and the steel member (i.e., second rotor disc) are joined together by electronic beam welding. As a result, deformation at the joints is suppressed to such a low level as to eliminate the necessity of performing after-treatment by machining. This makes it possible to suppress an increase in the amount of processing in the production of the turbine engine rotor. In particular, since the intermediate member and the steel member are joined together by electronic beam welding, no or a negligible amount of intermetallic compound is formed as a brittle phase at the joint interface between the intermediate member and the steel member. This makes it possible to suppress a decrease in the strength of the joint between the intermediate member and the steel member.

A method of joining a Ni-based superalloy member and a steel member according to the present invention is a method of joining a first member and a second member, the first member being formed of a precipitation hardened Ni-based superalloy, the second member being formed of a heat-resistant steel. The method includes: joining the first member and an intermediate member together by electronic beam welding, the intermediate member being formed of a solid solution strengthened Ni-based superalloy; performing age-hardening treatment on a joined body of the first member and the intermediate member at a first temperature which is a suitable temperature for age-hardening the first member; joining the intermediate member and the second member together by electronic beam welding; and performing annealing treatment on a joined body of the first member, the intermediate member, and the second member at a second temperature which is a suitable temperature for annealing the second member.

A junction structure of a Ni-based superalloy member and a steel member according to the present invention includes: a first member formed of a precipitation hardened Ni-based superalloy; and a second member formed of a heat-resistant steel. The first member and an intermediate member are joined together by electronic beam welding, the intermediate member being formed of a solid solution strengthened Ni-based superalloy, and the second member and the intermediate member are joined together by electronic beam welding.

According to the above method of joining a Ni-based superalloy member and a steel member or the above junction structure, the first member formed of the precipitation hardened Ni-based superalloy and the second member formed of the heat-resistant steel are connected via the intermediate member formed of the solid solution strengthened Ni-based superalloy. This makes it possible to suitably perform different heat treatments on the first member and the second member, respectively. Specifically, in a state where the first member and the intermediate member are jointed together, age-hardening treatment can be performed for allowing the precipitation hardened Ni-based superalloy portion to have necessary strength. Also, in a state where the first member, the intermediate member, and the second member are joined together, annealing treatment on the steel portion and residual stress relief treatment can be performed. This makes it possible to allow the junction structure of the Ni-based superalloy member and the steel member to have sufficient strength at the joint between the first member and the second member. Further, the first member and the intermediate member are joined together by electronic beam welding, and also, the intermediate member and the second member are joined together by electronic beam welding. As a result, deformation at the joints is suppressed to such a low level as to eliminate the necessity of performing after-treatment by machining. This makes it possible to suppress an increase in the amount of processing. In particular, since the intermediate member and the second member are joined together by electronic beam welding, no or a negligible amount of intermetallic compound is formed as a brittle phase at the joint interface between the intermediate member and the second member. This makes it possible to suppress a decrease in the strength of the joint between the intermediate member and the second member.

In the above, the solid solution strengthened Ni-based superalloy is desirably Inconel 625 (IN625).

In the above, the precipitation hardened Ni-based superalloy is desirably Inconel 718 (IN718), and in this case, the first temperature is desirably in a temperature range from 710 to 726 °C.

In the above, the steel is desirably 12% Cr steel, and in this case, the second temperature is desirably in a temperature range from 570 to 590 °C.

### Advantageous Effects of Invention

According to the present invention, the precipitation hardened Ni-based superalloy member (i.e., first rotor disc) and the steel member (i.e., second rotor disc), which are connected via the intermediate member, can be suitably subjected to different heat treatments, respectively. This makes it possible to allow the joint between the precipitation hardened Ni-based superalloy member and the steel member to have sufficient strength. Further, the precipitation hardened Ni-based superalloy member and the intermediate member are joined together by electronic beam welding, and also, the intermediate member and the steel member are joined together by electronic beam welding. As a result, deformation at the joints is suppressed to such a low level as to eliminate the necessity of performing after-treatment by machining. This makes it possible to suppress an increase in the amount of processing.

### Brief Description of Drawings

[Fig. 1] Fig. 1 is a partially cutaway side view of a gas turbine engine including a compressor rotor according to an embodiment of the present invention.
[Fig. 2] Fig. 2 is a cross-sectional view showing components of the compressor rotor.
[Fig. 3] Fig. 3 is a cross-sectional view illustrating a high temperature resistant rotor disc and a low temperature resistant rotor disc connected via an intermediate member.
[Fig. 4] Fig. 4 is a flowchart showing a flow of a process of connecting the high temperature resistant rotor disc and the low temperature resistant rotor disc.
[Fig. 5] Fig. 5 is an upper-half sectional view showing a state where the high temperature resistant rotor disc and the intermediate member are joined together.
[Fig. 6] Fig. 6 is an upper-half sectional view showing a state where the intermediate member and the low temperature resistant rotor disc are joined together.
[Fig. 7] Fig. 7 is an upper-half sectional view showing a state where the high temperature resistant rotor disc and the low temperature resistant rotor disc are connected via the intermediate member.
[Fig. 8] Fig. 8 is a cross sectional photograph showing an IN718 member and an FV535 member connected via an IN625 member.

### Description of Embodiments

Hereinafter, an embodiment of the present invention is described in detail with reference to the drawings. Described below is an embodiment where a method of joining a Ni-based superalloy member and a steel member, and a junction structure of the Ni-based superalloy member and the steel member, according to the present invention, are applied to a compressor rotor 11 included in a gas turbine engine (hereinafter, simply referred to as a "gas turbine"). In the drawings, the same or corresponding components are denoted by the same reference signs, and a repetition of the same description is avoided.

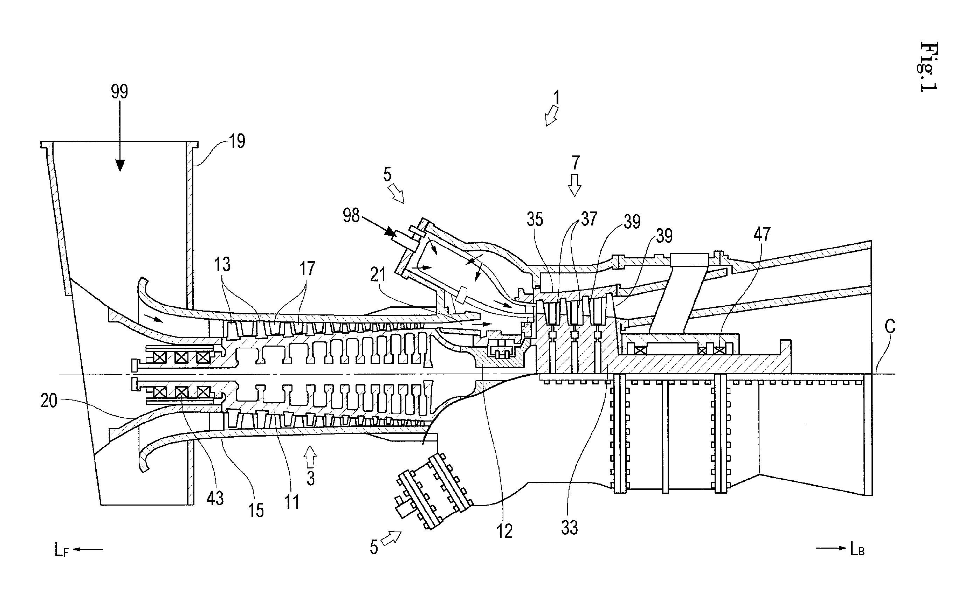

First, a schematic structure of a gas turbine 1 including a compressor rotor according to the present embodiment is described. Fig. 1 is a partially cutaway side view of the gas turbine engine including the compressor rotor according to the present embodiment. As shown in Fig. 1, the gas turbine 1 includes: a cylindrical housing 15 extending in the direction of a central axis C; a centrifugal or axial rotary compressor 3 accommodated in the housing 15; combustors 5; and a centrifugal or axial turbine 7. The gas turbine 1 according to the present embodiment includes a plurality of combustors 5. The combustors 5 are arranged at regular intervals in the circumferential direction of the gas turbine 1. The compressor 3, the combustors 5, and the turbine 7 are sequentially arranged on the same central axis, which is the central axis C of the gas turbine 1. Hereinafter, the direction in which the central axis C of the gas turbine 1 extends is referred to as an "axial direction". In the description below, the compressor 3 side in the axial direction may be referred to as a "front side L_{F}", and the turbine 7 side in the axial direction may be referred to as a "back side L_{B}".

The compressor 3 according to the present embodiment is an axial compressor. The compressor 3 includes the compressor rotor 11 at the front side L_{F} within the housing 15, the compressor rotor 11 forming the primary side of the rotating body of the gas turbine 1. A connecting unit 12 is connected to the back side L_{B} of the compressor rotor 11 in a manner that the connecting unit 12 is not rotatable relative to the compressor rotor 11. A large number of rotor blades 13 are provided on the outer peripheral surface of the compressor rotor 11, and a large number of stationary blades 17 are provided at the inner periphery of the front side L_{F} of the housing 15. A cylindrical cowl 20 is provided inside the housing 15 at the end of the front side L_{F} of the housing 15, and an intake cylinder 19 is provided outside the housing 15 at the end of the front side L_{F} of the housing 15.

The turbine 7 according to the present embodiment is an axial turbine. The turbine 7 includes: a turbine rotor 33 forming a secondary side of the rotating body of the gas turbine 1; and a turbine casing 35 covering the turbine rotor 33. Multi-stage turbine stationary blades 37 are provided at the inner periphery of the turbine casing 35 and arranged in the axial direction. The turbine rotor 33 is provided with multi-stage turbine rotor blades 39, which are arranged in the axial direction such that the turbine rotor blades 39 of the respective stages and the turbine stationary blades 37 of the respective stages are arranged alternately in the axial direction.

The compressor rotor 11 of the compressor 3 and the turbine rotor 33 of the turbine 7 are connected in the axial direction via the connecting unit 12, and thus integrated as the rotating body of the gas turbine 1. The rotating body is rotatably supported by the housing 15 via bearings 43 and 47.

In the gas turbine 1 having the above-described structure, the compressor 3 compresses combustion air 99 introduced from the outside and sends the compressed air into the combustors 5, and a fuel 98 is injected into the combustors 5 where the fuel 98 is combusted. To be more specific, when the compressor rotor 11 of the compressor 3 rotates, the combustion air 99 is sucked from the intake cylinder 19 into the housing 15 through a path between the inner peripheral surface of the housing 15 and the outer peripheral surface of the cowl 20 owing to the functions of the rotor blades 13 and the stationary blades 17. The combustion air 99 sucked into the housing 15 is then compressed. The compressed combustion air 99 is sent to each combustor 5 via a diffuser 21 provided between the compressor 3 and the combustor 5. In the combustor 5, the compressed combustion air 99 and the fuel 98 injected into the combustor 5 are mixed together and combusted, and thereby a high-temperature and high-pressure combustion gas is generated. The combustion gas flows into the turbine 7 through a turbine nozzle, and causes the turbine rotor 33 of the turbine 7 to rotate. Since the shaft of the turbine 7 is directly connected to the compressor 3, compression power is transmitted from the turbine 7 to the compressor 3. As a result, the operation of the gas turbine 1 continues.

Hereinafter, the compressor rotor 11 included in the gas turbine 1 having the above-described structure is described in detail. As shown in Fig. 1, the back side L_{B} of the compressor rotor 11 is positioned near the combustors 5 and comes into contact with the compressed combustion air 99. Thus, the back side L_{B} of the compressor rotor 11 is a region exposed to high temperatures. The front side L_{F} of the compressor rotor 11 is a region exposed to temperatures lower than the temperature of the back side L_{B} of the compressor rotor 11. Hereinafter, in the compressor rotor 11, the region exposed to high temperatures may be referred to as a "high temperature region", and the region exposed to temperatures lower than the temperature of the high temperature region may be referred to as a "low temperature region". It should be noted that the high temperature region includes portions of the compressor rotor 11 where the temperature increases to become higher than 300 °C, and the low temperature region includes portions of the compressor rotor 11 where the temperature does not become higher than 300 °C.

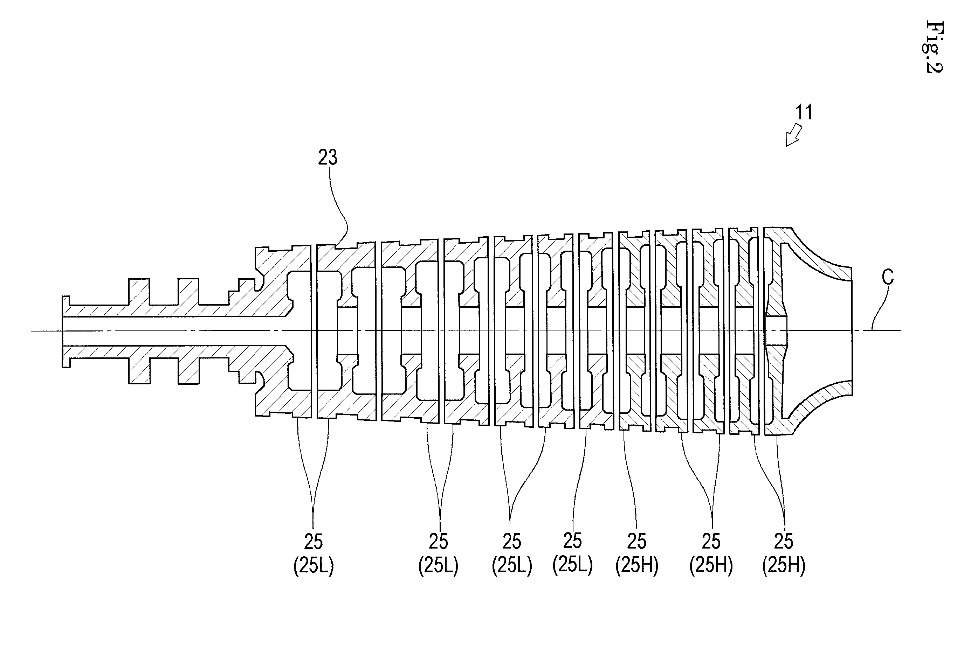

Fig. 2 is a cross-sectional view showing components of the compressor rotor 11. As shown in Fig. 2, the compressor rotor 11 includes a plurality of rotor discs 25, which are connected to one another in the axial direction. Each of the rotor discs 25 has a discoid shape and a hollow center. A recess 23 is formed in the outer periphery of each rotor disc 25. The rotor blades 13 are implanted into the recesses 23. Among the plurality of rotor discs 25 included in the compressor rotor 11, rotor discs in the high temperature region (hereinafter, referred to as "high temperature resistant rotor discs 25H") are formed of a precipitation hardened Ni-based superalloy, which is a material having high temperature strength. In the present embodiment, Inconel 718 (IN718) is used as the precipitation hardened Ni-based superalloy. Meanwhile, among the plurality of rotor discs 25 included in the compressor rotor 11, rotor discs in the low temperature region (hereinafter, referred to as "low temperature resistant rotor discs 25L") are formed of a relatively inexpensive steel member. In the present embodiment, stainless steel is used as the steel member. In particular, 12% Cr steel (e.g., FV535), which is a martensitic stainless steel having excellent high temperature strength, is used.

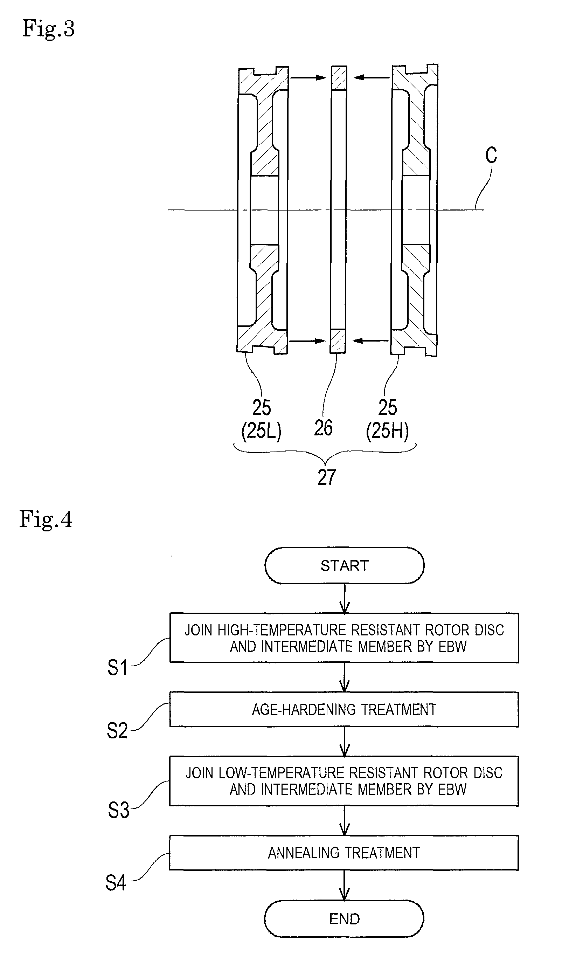

In the compressor rotor 11, the high temperature resistant rotor discs 25H, i.e., the Ni-based superalloy members, are joined to one another by electronic beam welding (EBW) or arc welding. Similarly, in the compressor rotor 11, the low temperature resistant rotor discs 25L, i.e., the steel members, are joined to one another by electronic beam welding or arc welding. In the compressor rotor 11, one of the high temperature resistant rotor discs 25H and its adjacent low temperature resistant rotor disc 25L, i.e., the Ni-based superalloy member and the steel member, are connected via an intermediate member 26 (see Fig. 3).

Fig. 3 is a cross-sectional view illustrating the high temperature resistant rotor disc 25H and the low temperature resistant rotor disc 25L connected via the intermediate member 26. As shown in Fig. 3, the high temperature resistant rotor disc 25H (Ni-based superalloy member) and the intermediate member 26 are joined together by electronic beam welding, and the intermediate member 26 and the low temperature resistant rotor disc 25L (steel member) are joined together by electronic beam welding. The intermediate member 26 is a solid solution strengthened Ni-based superalloy member. In the present embodiment, Inconel 625 (IN625) is used as the solid solution strengthened Ni-based superalloy. IN625 is strengthened as a result of Mo (= molybdenum) and Nb being solutionized in a Ni-Cr base, and thus has excellent high temperature strength.

Table 1 below shows the chemical compositions of the materials (precipitation hardened Ni-based superalloy, steel) of the rotor discs 25 (high temperature resistant rotor discs 25H, low temperature resistant rotor discs 25L) and the material (solid solution strengthened Ni-based superalloy) of the intermediate member 26 according to the present embodiment.

**[Table 1]**

| Member Type | Alloy Name | Chemical Components (mass %) | | | | | | | | | | | |
|---|---|---|---|---|---|---|---|---|---|---|---|---|---|
| | | C | Ni | Cr | Fe | Si | Mo | Mn | V | Co | Nb | Ti | Al |
| Steel member | FV535 | 0.09 | 0.5 | 11 | 80 | -- | 0.8 | 0.9 | 0.2 | 6 | 0.3 | -- | -- |
| Ni-based superalloy member | Inconel 718 | -- | 52.5 | 19 | 17 | -- | 3 | -- | -- | -- | 5 | 0.8 | 0.6 |
| Intermediate member | Inconel 625 | ≤ 0.1 | 58 | 21.5 | ≤5 | ≤ 0.5 | 9 | ≤0.5 | -- | ≤1 | 3.7 | ≤ 0.4 | ≤ 0.4 |

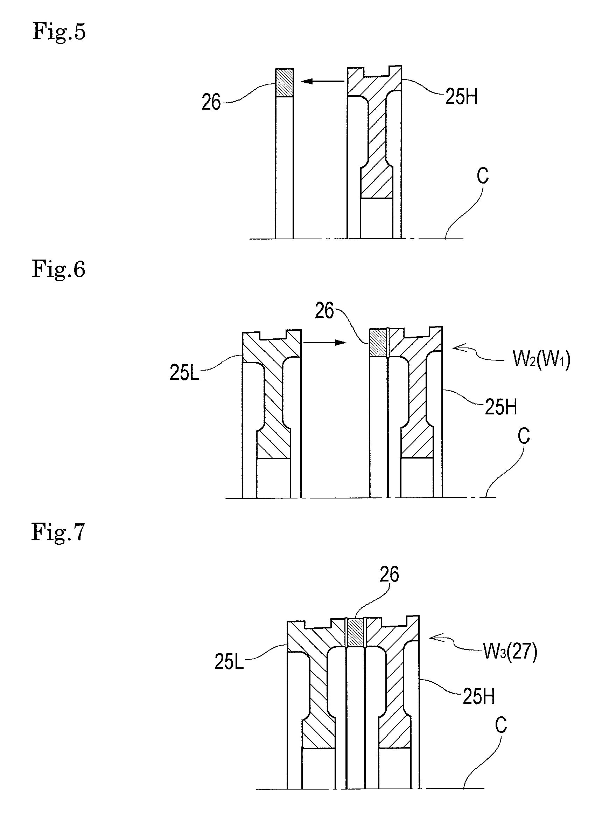

Next, a method of producing the compressor rotor 11 is described with reference to Figs. 4 to 7. Fig. 4 is a flowchart showing a flow of a process of connecting the high temperature resistant rotor disc 25H and the low temperature resistant rotor disc 25L. Fig. 5 is an upper-half sectional view showing a state where the high temperature resistant rotor disc 25H and the intermediate member 26 are joined together; Fig. 6 is an upper-half sectional view showing a state where the intermediate member 26 and the low temperature resistant rotor disc 25L are joined together; and Fig. 7 is an upper-half sectional view showing a state where the high temperature resistant rotor disc 25H and the low temperature resistant rotor disc 25L are connected via the intermediate member 26. Hereinafter, among production steps of producing the compressor rotor 11, steps of producing a rotor disc connected body 27 by connecting the high temperature resistant rotor disc 25H and the low temperature resistant rotor disc 25L are described in detail. The description below includes a description of a method of joining the precipitation hardened Ni-based superalloy member and the steel member.

First, as shown in Fig. 5, the high temperature resistant rotor disc 25H and the intermediate member 26, i.e., the precipitation hardened Ni-based superalloy member and the intermediate member 26, are brought into contact with and directly joined to each other by electronic beam welding with no use of a welding material (step S1). The joined body thus obtained by joining the high temperature resistant rotor disc 25H and the intermediate member 26 together is hereinafter referred to as a "primary work W₁". It should be noted that before the high temperature resistant rotor disc 25H is joined to the intermediate member 26, the high temperature resistant rotor disc 25H is solution heat treated at a temperature higher than or equal to a solid solution temperature at which a precipitation hardening phase is solutionized. The amount of base material melted by electronic beam welding is less than the amount of base material melted by arc welding, and also, electronic beam welding causes less distortion at the welded portion than arc welding. Moreover, since electronic beam welding is performed in a vacuum, a stable welding quality can be maintained. Accordingly, in the primary work W₁, deformation and distortion are small at the joint interface between the high temperature resistant rotor disc 25H and the intermediate member 26. Therefore, after-treatment following the welding process, such as a cutting process, is not necessary.

Next, age-hardening treatment is performed on the primary work W₁ (step S2). The primary work W₁ having gone through the age-hardening treatment is hereinafter referred to as a "secondary work W₂". In the age-hardening treatment, in order to increase the hardness and strength (ductility and toughness) of the solution heat treated high temperature resistant rotor disc 25H, i.e., the solution heat treated precipitation hardened Ni-based superalloy member, the primary work W₁ is kept evenly heated at a suitable first temperature. The "first temperature" herein is a temperature suitable for age-hardening the precipitation hardened Ni-based superalloy forming the high temperature resistant rotor disc 25H. Since the precipitation hardened Ni-based superalloy forming the high temperature resistant rotor disc 25H according to the present embodiment is IN718, the first temperature is in a temperature range from 710 to 726 °C, and most desirably 718 °C.

By performing the above age-hardening treatment on the primary work W₁, a fine precipitated phase (Ni₃Nb-γ" phase; gamma double prime phase), which is a strengthened phase, is formed in the base material of the precipitation hardened Ni-based superalloy (IN718) forming the high temperature resistant rotor disc 25H. Accordingly, the strength of the precipitation hardened Ni-based superalloy increases. It should be noted that if the precipitated phase (γ" phase) exists when the precipitation hardened Ni-based superalloy member and the intermediate member are welded together, a crack occurs, causing a significant decrease in the welding performance. Therefore, the age-hardening treatment needs to be performed after the high temperature resistant rotor disc 25H and the intermediate member 26 are welded together.

Next, as shown in Fig. 6, the intermediate member 26 and the low temperature resistant rotor disc 25L of the secondary work W₂, i.e., the intermediate member 26 and the steel member, are brought into contact with and directly joined to each other by electronic beam welding with no use of a welding material (step S3). As shown in Fig. 7, the joined body thus obtained by joining the secondary work W₂ and the low temperature resistant rotor disc 25L together is referred to as a "tertiary work W₃". It should be noted that quenching treatment is performed on the low temperature resistant rotor disc 25L before the low temperature resistant rotor disc 25L is joined to the intermediate member 26. Since the intermediate member 26 and the low temperature resistant rotor disc 25L are joined together by electronic beam welding, deformation at the joint interface between the low temperature resistant rotor disc 25L and the intermediate member 26 in the tertiary work W₃ is small. Therefore, after-treatment following the welding process, such as a cutting process, is not necessary.

Finally, annealing treatment is performed on the tertiary work W₃ (step S4). The tertiary work W₃ which has gone through the annealing treatment is hereinafter referred to as the "rotor disc connected body 27". The annealing treatment is performed in the following manner: the tertiary work W₃ is heated to a suitable second temperature and brought into an evenly-heated state; and thereafter cooled down under such conditions that the metal structure of the tertiary work W₃ is in a nearly equilibrium state when the temperature is reduced to a room temperature. The "second temperature" herein is a suitable temperature for annealing the steel member forming the low temperature resistant rotor disc 25L. Since the steel member forming the low temperature resistant rotor disc 25L according to the present embodiment is FV535, the second temperature is in a temperature range from 570 to 590 °C, and most desitably 580 °C.

By performing the above annealing treatment on the tertiary work W₃, residual stress after the electronic beam welding is performed is reduced at the joint between the high temperature resistant rotor disc 25H and the intermediate member 26 as well as at the joint between the intermediate member 26 and the low temperature resistant rotor disc 25L. That is, as a result of performing the above annealing treatment, the tertiary work W₃ is subjected to residual stress relief treatment (SR treatment; Stress Relief heat treatment). In addition, in the above annealing treatment, a portion of the steel member of the tertiary work W₃, the portion being previously affected by the welding, i.e., the portion being previously melted during the welding, is heated again, and thereby the portion is tempered and hardened. Thus, through the above annealing treatment, the strength of the steel member of the tertiary work W₃, particularly the strength of a portion of the steel member, the portion being previously affected by the welding, can be improved.

Through the above-described steps S1 to S4, the rotor disc connected body 27 can be obtained by connecting the high temperature resistant rotor disc 25H and the low temperature resistant rotor disc 25L via the intermediate member 26. An end surface of the rotor disc connected body 27 at the high temperature resistant rotor disc 25H side is joined to another high temperature resistant rotor disc 25H before or after step S1 by electronic beam welding or arc welding. Similarly, an end surface of the rotor disc connected body 27 at the low temperature resistant rotor disc 25L side is joined to another low temperature resistant rotor disc 25L before or after step S3 by electronic beam welding or arc welding. In this manner, the plurality of rotor discs 25 are sequentially joined to one another, and thereby the compressor rotor 11 is produced.

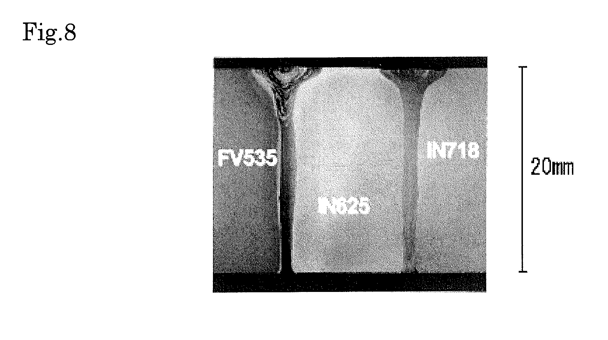

Fig. 8 is a cross sectional photograph showing the IN718 member (precipitation hardened Ni-based superalloy member) and the FV535 member (steel member) connected via the IN625 member (intermediate member) through the same process as in the above-described steps S1 to S4. It is understood from Fig. 8 that the IN718 member and the IN625 member are joined together by electronic beam welding with no use of a welding material, such that both of the members at their joint interface are melted and directly joined to each other. It is also understood from Fig. 8 that the IN625 member and the FV535 member are joined together by electronic beam welding with no use of a welding material, such that both of the members at their joint interface are melted and directly joined to each other. It is clear from Fig. 8 that distortion and deformation after the welding process is performed are small at the joint between the IN718 member and the IN625 member as well as at the joint between the IN625 member and the FV535 member.

It is well known that when the IN625 member and the FV535 member are joined together by arc welding, an intermetallic compound is formed as a brittle phase at the joint interface between the IN625 member and the FV535 member. Regarding the formation of such an intermetallic compound as a brittle phase, the following facts have been confirmed through microscopic observation: if the IN718 member (precipitation hardened Ni-based superalloy member) and the FV535 member (steel member) are connected via the IN625 member (intermediate member) through the same process as in the above-described steps S1 to S4, no intermetallic compound is formed as a brittle phase at the joint interface between the FV535 member and the IN625 member, or even if an intermetallic compound is formed as a brittle phase at the joint interface, the formation of the intermetallic compound is so small that the strength of the joint is not affected. As described above, in the case where the FV535 member and the IN625 member are joined together by electronic beam welding, the amount of material melted at the joint interface in the welding process is significantly smaller than in the case where these members are joined together by arc welding. Accordingly, the formation of an intermetallic compound as a brittle phase can be suppressed, and distortion and deformation at the joint interface can be suppressed.

Thus, according to the above-described method of producing the compressor rotor 11, the compressor rotor 11 includes: a low temperature resistant portion in which the low temperature resistant rotor discs 25L formed of the steel are joined to one another; and a high temperature resistant portion in which the high temperature resistant rotor discs 25H formed of the precipitation hardened Ni-based superalloy are joined to one another, the superalloy being resistant to higher temperatures than the steel. One high temperature resistant rotor disc 25H and one low temperature resistant rotor disc 25L are connected via the intermediate member 26 formed of the solid solution strengthened Ni-based superalloy. This makes it possible to suitably perform different heat treatments on the steel portion and the the precipitation hardened Ni-based superalloy portion, respectively. Specifically, in a state where the high temperature resistant rotor disc 25H and the intermediate member 26 are joined together, age-hardening treatment can be performed for allowing the precipitation hardened Ni-based superalloy portion to have necessary strength. Also, in a state where the high temperature resistant rotor disc 25H, the intermediate member 26, and the low temperature resistant rotor disc 25L are joined together, annealing treatment on the steel portion and residual stress relief treatment can be performed. This makes it possible to allow the connection portion between the high temperature resistant portion and the low temperature resistant portion of the compressor rotor 11 to have sufficient strength as a high-temperature component included in the gas turbine 1.

Further, according to the above-described method of producing the compressor rotor 11, the high temperature resistant rotor disc 25H and the intermediate member 26 are joined together by electronic beam welding, and also, the intermediate member 26 and the low temperature resistant rotor disc 25L are joined together by electronic beam welding. As a result, deformation at the joints is suppressed to such a low level as to eliminate the necessity of performing after-treatment by machining. This makes it possible to suppress an increase in the amount of processing in the production of the compressor rotor 11. In particular, since the intermediate member 26 and the low temperature resistant rotor disc 25L are joined together by electronic beam welding, no or a negligible amount of intermetallic compound is formed as a brittle phase at the joint interface between the intermediate member 26 and the low temperature resistant rotor disc 25L. This makes it possible to suppress a decrease in the strength of the joint between the intermediate member 26 and the low temperature resistant rotor disc 25L.

Although one preferred embodiment of the present invention is described above, the present invention is not limited to the above-described embodiment. Various design changes may be made to the above embodiment within the scope of the claims.

For example, in the above embodiment, IN718 is used as the precipitation hardened Ni-based superalloy. However, the above embodiment is not thus limited. A different precipitation hardened Ni-based superalloy may be used.

As another example, in the above embodiment, 12 Cr steel is used as the steel member. However, the above embodiment is not thus limited. A different heat-resistant steel that can be suitably used within the operating temperature limits of a turbine engine rotor may be used. For example, a low-alloy steel such as 2.5 Cr steel or 9 Cr steel, or stainless steel containing more than 12 % of Cr, may be used.

It should be noted that, in the above-described embodiment, the present invention applied to the compressor rotor included in the gas turbine engine is described. However, the present invention is more widely applicable. For example, the present invention is widely applicable to turbine engine rotors included in various turbine engines, such as aircraft turbine engines, vessel turbine engines, land vehicle turbine engines, and land-based power generating turbine engines.

### Industrial Applicability

The present invention is useful for producing a rotor with excellent heat resistance for use in various turbine engines, such as aircraft turbine engines, vessel turbine engines, land vehicle turbine engines, and land-based power generating turbine engines.

### Reference Signs List

- 1: gas turbine engine
- 3: compressor
- 5: combustor
- 7: turbine
- 11: compressor rotor
- 25: rotor disc
- 25H: high temperature resistant rotor disc
- 25L: low temperature resistant rotor disc
- 26: intermediate member
- 27: rotor disc connected body
- 33: turbine rotor

## Claims

1. A method of producing a turbine engine rotor, the method comprising:
joining a first rotor disc and an intermediate member together by electronic beam welding, the first rotor disc being formed of a solution heat treated precipitation hardened Ni-based superalloy, the intermediate member being formed of a solid solution strengthened Ni-based superalloy;
performing age-hardening treatment on a joined body of the first rotor disc and the intermediate member at a first temperature which is a suitable temperature for age-hardening the precipitation hardened Ni-based superalloy;
joining the intermediate member and a second rotor disc together by electronic beam welding, the second rotor disc being formed of a heat-resistant steel; and
performing annealing treatment on a joined body of the first rotor disc, the intermediate member, and the second rotor disc at a second temperature which is a suitable temperature for annealing the steel.

2. The method of producing a turbine engine rotor according to claim 1, wherein the solid solution strengthened Ni-based superalloy is Inconel 625 (IN625) [Inconel = IN, registered trademark; indication of trademark registration is omitted hereinafter].

3. The method of producing a turbine engine rotor according to claim 1 or claim 2, wherein
the precipitation hardened Ni-based superalloy is Inconel 718 (IN718), and the first temperature is in a temperature range from 710 to 726 °C.

4. The method of producing a turbine engine rotor according to any one of claims 1 to 3, wherein
the steel is 12% Cr steel, and
the second temperature is in a temperature range from 570 to 590 °C.

5. A turbine engine rotor including a plurality of rotor discs connected to each other in an axial direction, the turbine engine rotor comprising:
two rotor discs which are a first rotor disc and a second rotor disc adjacent to each other, the first rotor disc being formed of a precipitation hardened Ni-based superalloy, the second rotor disc being formed of a heat-resistant steel, wherein
the first rotor disc and an intermediate member are joined together by electronic beam welding, the intermediate member being formed of a solid solution strengthened Ni-based superalloy, and
the second rotor disc and the intermediate member are joined together by electronic beam welding.

6. The turbine engine rotor according to claim 5, wherein the solid solution strengthened Ni-based superalloy is Inconel 625 (IN625).

7. The turbine engine rotor according to claim 5 or claim 6, wherein the precipitation hardened Ni-based superalloy is Inconel 718 (IN718).

8. The turbine engine rotor according to any one of claims 5 to 7, wherein the steel is 12% Cr steel.

9. A method of joining a Ni-based superalloy member and a steel member, which is a method of joining a first member and a second member, the first member being formed of a solution heat treated precipitation hardened Ni-based superalloy, the second member being formed of a heat-resistant steel, the method comprising:
joining the first member and an intermediate member together by electronic beam welding, the intermediate member being formed of a solid solution strengthened Ni-based superalloy;
performing age-hardening treatment on a joined body of the first member and the intermediate member at a first temperature which is a suitable temperature for age-hardening the first member;
joining the intermediate member and the second member together by electronic beam welding; and
performing annealing treatment on a joined body of the first member, the intermediate member, and the second member at a second temperature which is a suitable temperature for annealing the second member.

10. The method of joining a Ni-based superalloy member and a steel member according to claim 9, wherein
the solid solution strengthened Ni-based superalloy is Inconel 625 (IN625).

11. The method of joining a Ni-based superalloy member and a steel member according to claim 9 or claim 10, wherein
the precipitation hardened Ni-based superalloy is Inconel 718 (IN718), and
the first temperature is in a temperature range from 710 to 726 °C.

12. The method of joining a Ni-based superalloy member and a steel member according to any one of claims 9 to 11, wherein
the steel is 12% Cr steel, and
the second temperature is in a temperature range from 570 to 590 °C.

13. A junction structure of a Ni-based superalloy member and a steel member, comprising:
a first member formed of a precipitation hardened Ni-based superalloy; and
a second member formed of a heat-resistant steel, wherein
the first member and an intermediate member are joined together by electronic beam welding, the intermediate member being formed of a solid solution strengthened Ni-based superalloy, and
the second member and the intermediate member are joined together by electronic beam welding.

14. The junction structure of a Ni-based superalloy member and a steel member according to claim 13, wherein the solid solution strengthened Ni-based superalloy is Inconel 625 (IN625).

15. The junction structure of a Ni-based superalloy member and a steel member according to claim 13 or claim 14, wherein the precipitation hardened Ni-based superalloy is Inconel 718 (IN718).

16. The junction structure of a Ni-based superalloy member and a steel member according to any one of claims 13 to 15, wherein the steel is 12% Cr steel.
